# EUROPEAN PATENT APPLICATION

(11) **EP 4 852 095 A1**
(43) Date of publication of application: **09.12.2026**
(21) Application number: 25861777.8
(22) Date of filing: 04.06.2025
(51) Int. Cl.: H01M 4/525

(54) **POSITIVE ELECTRODE MATERIAL AND PREPARATION METHOD THEREFOR, POSITIVE ELECTRODE SHEET, AND BATTERY**

(30) Priority: 02.04.2025 CN 202510413372
(71) Applicant: Eve Power Co., Ltd., Jingmen, Hubei 448000 (CN)
(72) Inventor: WEN, Shengyao, Jingmen, Hubei 448000 (CN); LIU, Fanfen, Jingmen, Hubei 448000 (CN); YUAN, Dingding, Jingmen, Hubei 448000 (CN); HE, Wei, Jingmen, Hubei 448000 (CN); LIU, Jincheng, Jingmen, Hubei 448000 (CN)
(74) Representative: Studio Torta S.p.A.
(86) International application number: PCT/CN2025/098964
(87) International publication number: WO 2026/207997

(57) **Abstract**

The present application provides a positive electrode material and a method for preparing the same, a positive electrode plate, and a battery. The positive electrode material includes a lithium-rich oxide, which has a chemical formula represented by Li₁₊ₓMn_{y}Ni_{z}MₐBᵣ, where M represents a doping metal element, B includes an oxygen element, and by molar ratio, 0.1 ≤ x ≤ 1.0, 0 ≤ y ≤ 1.0, 0.30 ≤ z ≤ 0.95, 0 ≤ a ≤ 0.1, and 2.0 ≤ r ≤ 2.7.

## Description

This application claims priority to and the benefit of Chinese Patent Application No. 202510413728.5, filed on April 02, 2025, the disclosure of which is incorporated herein by reference in its entirety.

### TECHNICAL FIELD

The present application relates to the field of battery technologies, and in particular, to a positive electrode material, a method for preparing the same, a positive electrode plate, and a battery.

### BACKGROUND

The influence of positive electrode materials on performance of the battery is crucial. Lithium-rich manganese-based positive electrode materials, which combine high energy density with cost advantages, have thus attracted widespread attention from both the academic and industrial communities.

### SUMMARY

However, in the related art, lithium-rich manganese-based positive electrode materials need to be operated at a relatively high voltage (e.g., 4.6 V) to exhibit a high gram capacity. Nevertheless, various side reactions will occur in electrode materials and battery systems under high voltage, which in turn lead to the instability of electrode materials and inefficiency of the battery system.

The present application provides a positive electrode material. The positive electrode material includes a lithium-rich oxide, which has a chemical formula represented by Li₁₊ₓMn_{y}Ni_{z}MₐBᵣ, where M represents a doping metal element, B includes an oxygen element, and by molar ratio, 0.1 ≤ x ≤ 1.0, 0 ≤ y ≤ 1.0, 0.30 ≤ z ≤ 0.95, 0 ≤ a ≤ 0.1, and 2.0 ≤ r ≤ 2.7.

The present application further provides a method for preparing a positive electrode material. The method for preparing the positive electrode material, which is used for preparing the above-mentioned positive electrode material, includes the steps of: providing a first lithium-rich oxide having a chemical formula represented by Li₁₊ₓMn_{y}Ni_{z}MₐOᵣ, where M represents a doping metal element, and by molar ratio, 0.1 ≤ x ≤ 1.0, 0 ≤ y ≤ 1.0, 0.30 ≤ z ≤ 0.95, 0 ≤ a ≤ 0.1, and 2.0 ≤ r ≤ 2.7; and obtaining the positive electrode material based on the first lithium-rich oxide.

The present application further provides a positive electrode plate. The positive electrode plate includes a positive electrode current collector and a positive electrode film layer combined with the positive electrode current collector, and the positive electrode film layer includes the above-mentioned positive electrode material or a positive electrode material prepared by the above-mentioned method for preparing the positive electrode material.

The present application further provides a battery. The battery includes the above-mentioned positive electrode plate.

### BENEFICIAL EFFECTS

In the present application, the positive electrode material includes a lithium-rich oxide. By adjusting the ratio of the lithium metal element to other metal elements in the lithium-rich oxide, the energy barrier for intercalation and deintercalation of lithium ions in the positive electrode material can be reduced, that is, the potential of the positive electrode material is lowered. In this way, when the positive electrode material is applied in a battery, the formation activation voltage of the battery is low; in other words, the positive electrode material can exhibit a high gram capacity even at a relatively low voltage, thereby enabling the battery to have a wide voltage window.

### BRIEF DESCRIPTION OF THE DRAWINGS

FIG. 1 is a scanning electron microscope image of a positive electrode material provided in Example 1 of the present application.
FIG. 2 is an X-ray diffraction pattern of the positive electrode material provided in Example 1 of the present application.

### DETAILED DESCRIPTION

In the present application, unless stated to the contrary, the directional terms such as "on" and "below" generally refer to the upper and lower positions when the device is actually in use or working, specifically corresponding to the orientation in the drawings; while "inner" and "outer" are relative to the outline of the device. In the description of the present application, the term "include" means "including but not limited to". The terms first, second, third, etc. are used merely as labels and do not impose numerical requirements or establish an order.

In the present application, "and/or" describes the associative relationship between related objects, indicating that there can be three types of relationships. For example, "A and/or B" can mean: A exists alone, both A and B exist simultaneously, or B exists alone. A and B may be singular or plural.

In the present application, "at least one" refers to one or more, and "a plurality of" refers to two or more. The expressions "one or more", "at least one of the following", or similar ones refer to any combination of these items, including any combination of a single item or multiple items. For example, "at least one of a, b, or c" or "at least one of a, b, and c" may all mean: a, b, c, a-b (i.e., a and b), a-c, b-c, or a-b-c, where a, b, and c can each be singular or plural.

Various embodiments of the present application may exist in the form of a range; it should be understood that the description in the form of a range is merely for convenience and brevity, and should not be construed as a rigid limitation on the scope of the present application; therefore, it should be considered that the stated range description has specifically disclosed all possible subranges and individual numerical values within that range. For example, a range description from 1 to 6 should be considered as specifically disclosing subranges such as from 1 to 3, from 1 to 4, from 1 to 5, from 2 to 4, from 2 to 6, from 3 to 6, etc., as well as individual numbers within the stated range, such as 1, 2, 3, 4, 5, and 6, and this applies regardless of the range. In addition, whenever a numerical range is indicated herein, it is meant to include any referenced number (whether fractional or integer) within the indicated range.

In a first aspect, an embodiment of the present application provides a positive electrode material that includes a lithium-rich oxide. The lithium-rich oxide has a chemical formula represented by Li₁₊ₓMn_{y}Ni_{z}MₐBᵣ, where M represents a doping metal element, B includes an oxygen element, and by molar ratio, 0.1 ≤ x ≤ 1.0, 0 ≤ y ≤ 1.0, 0.30 ≤ z ≤ 0.95, 0 ≤ a ≤ 0.1, and 2.0 ≤ r ≤ 2.7.

It can be understood that when a = 0, that is, the lithium-rich oxide does not contain the doping metal element; and when a > 0, the lithium-rich oxide contains the doping metal element. For example, a is 0, 0.01, 0.02, 0.03, 0.04, 0.05, 0.06, 0.07, 0.08, 0.09, or 0.1.

The positive electrode material provided in the embodiments of the present application includes the lithium-rich oxide. By adjusting the ratio of the lithium metal element to other metal elements in the lithium-rich oxide, the energy barrier for intercalation and deintercalation of lithium ions in the positive electrode material can be reduced, that is, the potential of the positive electrode material is lowered. In this way, when the positive electrode material is applied in a battery, the formation activation voltage of the battery is low; in other words, the positive electrode material can exhibit a high gram capacity even at a relatively low voltage (e.g., 4.2 V), thereby enabling the battery to have a wide voltage window.

In some embodiments, the lithium-rich oxide contains a doping metal element, i.e., a > 0. By doping the lithium-rich oxide with metals other than Li, Mn, and Ni, the potential of the positive electrode material can be further lowered, thereby reducing the formation activation voltage of the battery. Optionally, the doping metal element includes at least one of Fe, Al, Mg, Ti, Nb, and Zr. Doping the above-mentioned metals into the lithium-rich oxide can effectively reduce the potential of the positive electrode material.

In some embodiments, by molar ratio, 0.1 ≤ x ≤ 0.6, 0.18 ≤ y ≤ 0.625, 0.375 ≤ z ≤ 0.74, 0 ≤ a ≤ 0.1, and 2.05 ≤ r ≤ 2.35. Within this ratio range, different metal elements can work synergistically to reduce the potential of the positive electrode material. For example, within this ratio range, the gram capacity of the positive electrode material at 4.2 V can reach 160 mAh/g. For example, x is 0.1, 0.2, 0.3, 0.4, 0.5, or 0.6; y is 0.18, 0.20, 0.30, 0.40, 0.50, 0.60, or 0.625; z is 0.375, 0.40, 0.50, 0.60, 0.70, or 0.74; a is 0.01, 0.02, 0.03, 0.04, 0.05, 0.06, 0.07, 0.08, 0.09, or 0.1; and r is 2.05, 2.15, 2.25, or 2.35.

In some embodiments, B further includes a nitrogen element, that is, the lithium-rich oxide is further doped with the nitrogen element. During the intercalation and deintercalation processes of lithium ions in the lithium-rich oxide, lattice expansion or contraction may occur, which leads to structural changes, collapse, etc. of the lithium-rich oxide. However, when the nitrogen element is doped into the lithium-rich oxide, such nitrogen doping belongs to anion doping, which can improve the structural stability of the lithium-rich oxide during the intercalation and deintercalation processes of lithium ions.

In some embodiments, based on the weight of the positive electrode material, the doping amount of the nitrogen element is less than or equal to 1.0wt%. In other words, the mass content of nitrogen in the positive electrode material is less than or equal to 1.0wt%. Generally, the doping amount of nitrogen in the positive electrode material should not be too high; otherwise, it will affect the synthesis stability of the positive electrode material during the preparation process, thereby increasing the difficulty of preparing the positive electrode material. In particular, when the doping concentration is relatively high, significant adjustments to the doping process are required, which instead increases the production cost of the positive electrode material. For example, the doping amount of nitrogen element in the positive electrode material is 0.1wt%, 0.2wt%, 0.4wt%, 0.6wt%, 0.8wt%, or 1.0wt%.

In some embodiments, the surface of the lithium-rich oxide is provided with a carbon coating layer. The interfacial reactions between the lithium-rich oxide and the electrolyte mainly include intercalation/deintercalation of lithium ions and other side reactions. Since the transport rate of lithium ions in the electrolyte is higher than the transport rate of lithium ions in the lithium-rich oxide, lithium ions in the electrolyte tend to accumulate on the surface of the lithium-rich oxide. By introducing the carbon coating layer-which is more easily wetted by the electrolyte compared to the lithium-rich oxide-a transitional intermediate region is formed. This further leads to a gradient distribution of lithium ions from the electrolyte to the coating layer and then to the lithium-rich oxide, which in turn assists in intercalation/deintercalation of lithium ions, thereby reducing the potential of the positive electrode material, and improve the stability and cycling performance of the positive electrode material. Optionally, in cases where nitrogen is doped into the lithium-rich oxide, nitrogen is also doped into the carbon coating layer. This allows nitrogen doping to be carried out simultaneously when the carbon coating layer is coated on the surface of the lithium-rich oxide, thereby reducing the preparation steps of the positive electrode material and lowering the production cost.

In some embodiments, the carbon in the carbon coating layer includes graphitized amorphous carbon, and a content of the graphitized amorphous carbon is less than or equal to 10wt% based on the total mass of the carbon in the carbon coating layer. Generally, the carbon in the carbon coating layer is mainly amorphous carbon, which has the characteristics of a large interlayer spacing and a disordered microcrystalline structure. By graphitizing part of the amorphous carbon, this part of the amorphous carbon transforms from a disordered amorphous state to an ordered graphite structure. This can promote the intercalation and deintercalation of lithium ions, reduce the potential of the positive electrode material, thereby lowering the formation activation voltage of the battery and reducing polarization. In general, the graphitized amorphous carbon may be an amorphous carbon that gradually transforms from a disordered structure to a more ordered graphite structure by high temperature processing. If the content of graphitized amorphous carbon in the carbon coating layer is too high, the production cost of the positive electrode material will be increased. By controlling the content of graphitized amorphous carbon in the carbon coating layer to be less than or equal to 10wt%, the cost of the positive electrode material can be controlled while ensuring effective intercalation and deintercalation of lithium ions. For example, based on the total mass of carbon in the carbon coating layer, the content of the graphitized amorphous carbon is 1wt%, 2wt%, 3wt%, 4wt%, 5wt%, 6wt%, 7wt%, 8wt%, 9wt%, or 10wt%.

In some embodiments, the content of the graphitized amorphous carbon is less than or equal to 3wt% based on the total mass of the positive electrode material. For example, based on the total mass of the positive electrode material, the content of the graphitized amorphous carbon is 0.5wt%, 1wt%, 1.5wt%, 2wt%, 2.5wt%, or 3wt%.

In some embodiments, the carbon coating layer has a thickness of 1 nm to 10 nm. The provision of the carbon coating layer can facilitate the intercalation and deintercalation of lithium ions, thereby reducing the potential of the positive electrode material. However, the carbon coating layer shall not be too thick; otherwise, it will cause energy loss and also degrade the performance of the battery. For example, the thickness of the carbon coating layer is 1 nm, 2 nm, 3 nm, 4 nm, 5 nm, 6 nm, 7 nm, 8 nm, 9 nm, or 10 nm.

In some embodiments, the positive electrode material is granular and has a D50 particle size of 1.0 µm to 15.0 µm. It can be understood that the larger the particle size of the positive electrode material, the greater the difficulty of the intercalation and deintercalation of lithium ions in the positive electrode material, and thus the higher the formation activation voltage of the battery. Reducing the particle size of the positive electrode material can lower the energy barrier for the intercalation and deintercalation of lithium ions in the positive electrode material, thereby reducing the potential of the positive electrode material. However, the particle size of the positive electrode material should not be too small; otherwise, it will lead to intensified side reactions on the surface of the positive electrode material, which will instead affect the performance of the battery. For example, the positive electrode material has a D50 particle size of 1.0 µm, 2.0 µm, 3.0 µm, 4.0 µm, 5.0 µm, 6.0 µm, 7.0 µm, 8.0 µm, 9.0 µm, 10.0 µm, 11.0 µm, 12.0 µm, 13.0 µm, 14.0 µm, or 15.0 µm.

In a second aspect, an embodiment of the present application provides a method for preparing a positive electrode material, which is used for preparing the above positive electrode material. The method for preparing the positive electrode material includes the following steps.

In step S10, a first lithium-rich oxide is provided. The first lithium-rich oxide has a chemical formula represented by Li₁₊ₓMn_{y}Ni_{z}MₐOᵣ, where M represents a doping metal element, and by molar ratio, 0.1 ≤ x ≤ 1.0, 0 ≤ y ≤ 1.0, 0.30 ≤ z ≤ 0.95, 0 ≤ a ≤ 0.1, and 2.0 ≤ r ≤ 2.7.

In step S20, a positive electrode material is obtained based on the first lithium-rich oxide.

The method for preparing the positive electrode material provided in the embodiments of the present application is simple and easy to operate.

In some embodiments, the positive electrode material obtained based on the first lithium-rich oxide refers to the first lithium-rich oxide directly used as the positive electrode material. It can be understood that the lithium-rich oxide includes the first lithium-rich oxide. The first lithium-rich oxide refers to cases where X in the lithium-rich oxide only includes oxygen.

In some embodiments, in step S10, providing the first lithium-rich oxide includes the following steps.

In step S11, a nickel source and a manganese source are added to a solvent to obtain a first mixed solution.

In step S12, a precipitant is added to the first mixed solution. After filtering and drying, a precursor is obtained.

In step S13, a first mixing treatment is performed on a lithium source and the precursor to obtain a first mixture.

In step S14, a first calcination treatment is performed on the first mixture to obtain the first lithium-rich oxide.

In some embodiments, when preparing the first mixed solution, a doping metal source is further added to the solvent. That is, in step S11, the nickel source, the manganese source, and the doping metal source are added to the solvent to obtain the first mixed solution. It can be understood that the first mixed solution prepared in this case includes the nickel source, the manganese source, and the doping metal source, and thus the prepared first lithium-rich oxide contains the doping metal element, that is, a > 0. Of course, in other embodiments, the doping metal source may not be added to the solvent. In this case, the prepared first mixed solution contains the nickel source and the manganese source but no doping metal source, and thus the prepared first lithium-rich oxide does not contain the doping metal element, that is, a = 0.

The following uses an example in which the first mixed solution includes the nickel source, the manganese source, and the doping metal source for description.

In some embodiments, in step S11, the nickel source may include at least one of nickel sulfate, nickel nitrate, nickel acetate, nickel carbonate, and nickel chloride; the manganese source may include at least one of manganese sulfate, manganese nitrate, manganese carbonate, manganese acetate, manganese tetroxide, and manganese dioxide; and the doping metal source may include at least one of an iron salt, an aluminum salt, a magnesium salt, a titanium salt, a niobium salt, and a zirconium salt.

In some embodiments, in step S11, the solvent includes water. In this case, the nickel source, the manganese source, and the doping metal source may generally be selected from a nickel salt, a manganese salt, and a doping metal salt that are easily soluble in water. The nickel salt, the manganese salt, and the doping metal salt are dissolved in water to obtain the first mixed solution. In the first mixed solution, the nickel element, the manganese element, and the doping metal element are respectively distributed in water in the form of manganese ions, nickel ions, and doping metal ions.

In some embodiments, in step S11, in cases where at least one of the nickel source, the manganese source, and the doping metal source includes a metal oxide that is sparingly soluble in water, the solvent may further include a water-soluble acid. By utilizing the reaction between the acid and the metal oxide, the metal elements can be distributed in the water in the form of ions.

In some embodiments, in step S11, in the first mixed solution, a molar ratio of the manganese element to the nickel element to the doping metal element is (0-1.0): (0.3-0.95): (0-0.1). Generally, in the first mixed solution, the molar ratio of the manganese element, the nickel element, and the doping metal element will affect the composition of the lithium-rich oxide in the prepared positive electrode material. By controlling the molar ratio of the manganese element, the nickel element, and the doping metal element in the first mixed solution, the potential of the positive electrode material can be adjusted. For example, the molar ratio of the manganese element to the nickel element to the doping metal element is 0.5:0.5:0, 0.4:0.5:0.08, 0.3:0.7:0.07, or 0.2:0.7:0.09.

In some embodiments, in step S11, in the first mixed solution, the concentration of the manganese element ranges from 0.1 mol/L to 0.65 mol/L, the concentration of the nickel element ranges from 0.3 mol/L to 1.5 mol/L, and the concentration of the doping metal element ranges from 0.01 mol/L to 0.1 mol/L. By appropriately increasing the concentration of the nickel element in the first mixed solution, the content of the nickel element in the lithium-rich oxide can be increased. The increase in the content of the nickel element is beneficial to reducing the potential of the positive electrode material, thereby lowering the activation voltage of the battery. For example, in the first mixed solution, the concentration of the manganese element is 0.1 mol/L, 0.2 mol/L, 0.3 mol/L, 0.4 mol/L, 0.5 mol/L, 0.6 mol/L, or 0.65 mol/L; the concentration of the nickel element is 0.3 mol/L, 0.5 mol/L, 0.7 mol/L, 0.9 mol/L, 1.1 mol/L, 1.3 mol/L, or 1.5 mol/L; and the concentration of the doping metal element is 0.01 mol/L, 0.02 mol/L, 0.04 mol/L, 0.06 mol/L, 0.08 mol/L, or 0.1 mol/L.

In some embodiments, in step S12, the precipitant includes at least one of sodium hydroxide and potassium hydroxide. The above-mentioned precipitants all contain hydroxide ions. When such a precipitant is added to the first mixed solution, the metal ions in the first mixed solution (such as nickel ions, manganese ions, and doping metal ions, etc.) can react with the hydroxide ions to form precipitates. The precursor can be obtained through filtering and drying of the precipitate. Optionally, after adding the precipitant, the concentration of the precipitant in the first mixed solution ranges from 0.1 mol/L to 2.0 mol/L. Here, the concentration of the precipitant refers to the designed concentration of the precipitant in the first mixed solution, that is, the theoretical concentration of the precipitant in the first mixed solution before the precipitation reaction occurs. For example, the concentration of the precipitant is 0.1 mol/L, 0.2 mol/L, 0.4 mol/L, 0.6 mol/L, 0.8 mol/L, 1.0 mol/L, 1.2 mol/L, 1.4 mol/L, 1.6 mol/L, 1.8 mol/L, or 2.0 mol/L.

In some embodiments, in step S12, after adding the precipitant, the first mixed solution becomes alkaline because the precipitant contains hydroxide ions. Optionally, the pH of the first mixed solution ranges from 8 to 11. For example, the pH of the first mixed solution is 8, 8.5, 9, 9.5, 10, 10.5, or 11.

In some embodiments, in step S12, the duration of the precipitation reaction ranges from 3 h to 10 h. Here, the duration of the precipitation reaction refers to the length of time from when the precipitant is added to the first mixed solution until the precipitate formed by the reaction is filtered. By controlling the duration of the precipitation reaction within the above range, the metal ions in the first mixed solution can fully react with the precipitant, while ensuring production efficiency.

In some embodiments, in step S13, the lithium source includes at least one of lithium hydroxide, lithium carbonate, and lithium oxide. In step S13, the specific operation of performing the first mixing treatment on the lithium source and the precursor is grinding the lithium source and the precursor. During the grinding process, the lithium source and the precursor are thoroughly mixed, thereby obtaining the first mixture. Optionally, the first mixing treatment is performed for 30 min to 180 min, for example, 30 min, 60 min, 90 min, 120 min, 150 min, or 180 min.

In some embodiments, in step S13, in the first mixture, a molar ratio of the lithium element in the lithium source to the nickel element in the precursor ranges from 1.2 to 4.0. By controlling the molar ratio of the lithium element to the nickel element during the preparation process, the prepared positive electrode material can not only have a low potential but also a large amount of lithium extraction capacity, thereby improving the energy density of the battery. For example, the molar ratio of the lithium element in the lithium source to the nickel element in the precursor is 1.2, 1.4, 1.5, 1.6, 1.7, 1.8, 2.0, 2.2, 2.4, 2.6, 2.8, 3.0, 3.2, 3.4, 3.6, 3.8, or 4.0.

In some embodiments, in step S14, the first calcination treatment is performed at a temperature of 600°C to 800°C for 3 h to 8 h. During the first calcination treatment, the lithium source reacts with the precursor to obtain the first lithium-rich oxide. For example, the first calcination treatment is performed at a temperature of 600°C, 650°C, 700°C, 750°C, or 800°C; and the first calcination treatment is performed for 3 h, 4 h, 5 h, 6 h, 7 h, or 8 h. Optionally, the first calcination treatment is performed under an air atmosphere.

In some embodiments, in step S14, the first lithium-rich oxide is obtained after the first calcination treatment. The lithium-rich oxide has a chemical formula represented by Li₁₊ₓMn_{y}Ni_{z}MₐOᵣ, where M represents a doping metal element, and by molar ratio, 0.1 ≤ x ≤ 1.0, 0 ≤ y ≤ 1.0, 0.30 ≤ z ≤ 0.95, 0 ≤ a ≤ 0.1, and 2.0 ≤ r ≤ 2.7.

In some embodiments, in step S20, obtaining the positive electrode material based on the first lithium-rich oxide includes the following steps.

In step S21, a second mixing treatment is performed on a first coating agent and the first lithium-rich oxide to obtain a second mixture. The first coating agent is an organic compound containing a nitrogen element.

In step S22, a second calcination treatment is performed on the second mixture to obtain a second lithium-rich oxide. A surface of the second lithium-rich oxide is coated with a carbon coating layer. The second lithium-rich oxide has a chemical formula represented by Li₁₊ₓMn_{y}Ni_{z}MₐBᵣ, where M represents a doping metal element, B includes O and N, and by molar ratio, 0.1 ≤ x ≤ 1.0, 0 ≤ y ≤ 1.0, 0.30 ≤ z ≤ 0.95, 0 ≤ a ≤ 0.1, and 2.0 ≤ r ≤ 2.7.

By mixing the organic compound containing the nitrogen element with the first lithium-rich oxide and performing high-temperature calcination, the organic compound containing the nitrogen element will undergo thermal decomposition during this process. Among them, the nitrogen element will penetrate into the first lithium-rich oxide under the action of high temperature, thereby realizing the doping of the first lithium-rich oxide to obtain the second lithium-rich oxide. Meanwhile, carbon elements will remain and form the carbon coating layer covering the surface of the second lithium-rich oxide.

It can be understood that the lithium-rich oxide further includes the second lithium-rich oxide. The second lithium-rich oxide refers to the case where B in the lithium-rich oxide includes O and N.

In some embodiments, in step S21, the first coating agent includes at least one of polyaniline and polycyanamide.

In some embodiments, in step S21, when preparing the second mixture, a second coating agent is further added to the first lithium-rich oxide, and a carbonization temperature of the second coating agent is lower than a carbonization temperature of the first coating agent. That is, in step S21, the second mixing treatment is performed on the first coating agent, the second coating agent, and the first lithium-rich oxide to obtain the second mixture. The carbonization temperature of the second coating agent is lower than the carbonization temperature of the first coating agent, which means that the temperature resistance of the second coating agent is lower than the temperature resistance of the first coating agent. In this way, after the second mixture undergoes the second calcination treatment, the first coating agent is more likely to form residual groups, while the second coating agent is more likely to be carbonized to obtain graphitized amorphous carbon. Moreover, the combination of the first coating agent and the second coating agent can also make the prepared carbon coating layer have a three-dimensional structure, further improving the intercalation and deintercalation of lithium ions.

The second coating agent may be a nitrogen-containing organic compound, or may not be a nitrogen-containing organic compound. In some embodiments, in step S21, the second coating agent includes at least one of glucose, polyethylene glycol (PEG), sucrose, polyaniline, and polypyrrole.

In some embodiments, in step S21, in the second mixture, the mass ratio of the first coating agent to the second coating agent to the first lithium-rich oxide is (0.1-2.0): (3.0-6.0): (92-94). Under this ratio, the prepared positive electrode material may have a relatively low potential.

In some embodiments, in step S22, the second calcination treatment is performed at a temperature of 600°C to 800°C for 6 h to 12 h. For example, the second calcination treatment is performed at a temperature of 600°C, 650°C, 700°C, 750°C, or 800°C; and the second calcination treatment is performed for 6 h, 7 h, 8 h, 9 h, 10 h, 11 h, or 12 h. Optionally, the second calcination treatment is performed under an inert atmosphere.

In a third aspect, an embodiment of the present application provides a positive electrode plate, including a positive electrode current collector and a positive electrode film layer combined with the positive electrode current collector. The positive electrode film layer includes the above-mentioned positive electrode material or a positive electrode material prepared by the above-mentioned method for preparing the positive electrode material.

In some embodiments, the positive electrode current collector is an aluminum foil. For example, the positive electrode film layer is provided on one surface or both surfaces of the aluminum foil.

In some embodiments, the positive electrode film layer further includes a conductive agent and a binder. For example, the conductive agent includes at least one of conductive carbon black (SP), carbon nanotubes (CNT), and vapor grown carbon fiber (VGCF). For example, the binder includes at least one of polyacrylic acid (PAA), polyvinylidene fluoride (PVDF), and polyvinyl alcohol (PVA).

In some embodiments, the positive electrode film layer includes 95wt% to 97wt%, 1wt% to 2wt% of the conductive agent, and 1wt% to 3wt% of the binder.

In a fourth aspect, an embodiment of the present application provides a battery, including the above-mentioned positive electrode plate.

In some embodiments, the battery further includes a negative electrode plate and a separator. The positive electrode plate, the negative electrode plate, and the separator are stacked, and the separator is located between the positive electrode plate and the negative electrode plate.

In some embodiments, the battery may also include a negative electrode plate and a solid electrolyte film. The positive electrode plate, the negative electrode plate, and the solid electrolyte film are stacked, and the solid electrolyte film is located between the positive electrode plate and the negative electrode plate.

In some embodiments, the negative electrode plate includes a negative electrode current collector and a negative electrode film layer combined with the negative electrode current collector. The negative electrode film layer includes at least one of graphite, silicon, silicon oxygen, and silicon carbon.

In some embodiments, the battery further includes a housing, in which an electrolyte is contained. The positive electrode plate and the negative electrode plate are also located in the housing, and the electrolyte soaks the positive electrode plate and the negative electrode plate.

In some embodiments, the battery is a lithium-ion battery.

The following provides descriptions with reference to specific embodiments.

### Example 1

### 1.1. Preparation of Positive Electrode Material

In step S1, dissolve soluble nickel salt (nickel sulfate) and manganese salt (manganese sulfate) in water to obtain a first mixed solution. In the first mixed solution, the concentration of Ni element is 0.475 mol/L, and the concentration of Mn element is 0.525 mol/L.

In step S2, add sodium hydroxide as a precipitant to the first mixed solution, and after a precipitation reaction for 5 h, filter and dry to obtain a precursor.

In step S3, grind and mix a lithium source (lithium hydroxide) and the precursor at a molar ratio of lithium element to Ni element of 1.15:0.475, then dry to obtain a first mixture.

In step S4, perform low-temperature calcination (i.e., a first calcination treatment) on the first mixture at a temperature of 700°C for 5 h to obtain a first lithium-rich oxide.

In step S5, wet-mix the first lithium-rich oxide, a first coating agent (polyaniline), and a second coating agent (glucose) at a mass ratio of 93:0.5:4 to obtain a second mixture.

In step S6, dry and calcine the second mixture (i.e., a second calcination treatment) at a temperature of 700°C for 8 h to obtain a positive electrode material.

1.2. Preparation of the positive electrode plate: Premix the above-mentioned positive electrode material, the conductive agent SP, and the binder PVDF at a mass ratio of 96:2.5:1.5. Then, stir them in a stirring tank for uniform mixing, and add the solvent N-methylpyrrolidone (NMP) to prepare positive electrode slurry. Control the discharge viscosity and solid content of the positive electrode slurry properly, then uniformly coat the positive electrode slurry on the aluminum foil. After drying, perform cold pressing, die-cutting, and slitting to obtain a positive electrode plate.

1.3. Preparation of the battery: Assemble the above positive electrode plate, the negative electrode plate (the formula of the negative electrode slurry is as follows: graphite: SP: CMC: SBR = 96.7:0.6:1.2:1.5 (mass ratio), with copper foil as the current collector), the separator (PE separator), and the electrolyte (the electrolyte is 1M LiPF₆ (EC: DEC: DMC = 1:1:1, volume ratio)) into a battery.

### Example 2

This example differs from Example 1 in the following steps.

### 1.1. Preparation of Positive Electrode Material

In step S1, dissolve soluble nickel salt (nickel sulfate) and manganese salt (manganese sulfate) in water to obtain a first mixed solution. In the first mixed solution, the concentration of Ni element is 0.5 mol/L, and the concentration of Mn element is 0.5 mol/L.

In step S2, add sodium hydroxide as a precipitant to the first mixed solution, and after a precipitation reaction for 5 h, filter and dry to obtain a precursor.

In step S3, grind and mix a lithium source (lithium hydroxide) and the precursor at a molar ratio of lithium element to Ni element of 1.10:0.5, then dry to obtain a first mixture.

In step S4, perform low-temperature calcination (i.e., a first calcination treatment) on the first mixture at a temperature of 700°C for 5 h to obtain a first lithium-rich oxide.

In step S5, wet-mix the first lithium-rich oxide, a first coating agent (polyaniline), and a second coating agent (glucose) at a mass ratio of 93:0.5:4 to obtain a second mixture.

In step S6, dry and calcine the second mixture (i.e., a second calcination treatment) at a temperature of 700°C for 8 h to obtain a positive electrode material.

The rest is the same as in Example 1.

### Example 3

This example differs from Example 1 in the following steps.

### 1.1. Preparation of Positive Electrode Material

In step S1, dissolve soluble nickel salt (nickel sulfate) and manganese salt (manganese sulfate) in water to obtain a first mixed solution. In the first mixed solution, the concentration of Ni element is 0.45 mol/L, and the concentration of Mn element is 0.55 mol/L.

In step S2, add sodium hydroxide as a precipitant to the first mixed solution, and after a precipitation reaction for 5 h, filter and dry to obtain a precursor.

In step S3, grind and mix a lithium source (lithium hydroxide) and the precursor at a molar ratio of lithium element to Ni element of 1.20:0.45, then dry to obtain a first mixture.

In step S4, perform low-temperature calcination (i.e., a first calcination treatment) on the first mixture at a temperature of 700°C for 5 h to obtain a first lithium-rich oxide.

In step S5, wet-mix the first lithium-rich oxide, a first coating agent (polyaniline), and a second coating agent (glucose) at a mass ratio of 93:0.5:4 to obtain a second mixture.

In step S6, dry and calcine the second mixture (i.e., a second calcination treatment) at a temperature of 700°C for 8 h to obtain a positive electrode material.

The rest is the same as in Example 1.

### Example 4

This example differs from Example 1 in the following steps.

### 1.1. Preparation of Positive Electrode Material

In step S1, dissolve soluble nickel salt (nickel sulfate) and manganese salt (manganese sulfate) in water to obtain a first mixed solution. In the first mixed solution, the concentration of Ni element is 0.375 mol/L, and the concentration of Mn element is 0.625 mol/L.

In step S2, add sodium hydroxide as a precipitant to the first mixed solution, and after a precipitation reaction for 5 h, filter and dry to obtain a precursor.

In step S3, grind and mix a lithium source (lithium hydroxide) and the precursor at a molar ratio of lithium element to Ni element of 1.45:0.375, then dry to obtain a first mixture.

In step S4, perform low-temperature calcination (i.e., a first calcination treatment) on the first mixture at a temperature of 700°C for 5 h to obtain a first lithium-rich oxide.

In step S5, wet-mix the first lithium-rich oxide, a first coating agent (polyaniline), and a second coating agent (glucose) at a mass ratio of 93:0.5:4 to obtain a second mixture.

In step S6, dry and calcine the second mixture (i.e., a second calcination treatment) at a temperature of 700°C for 8 h to obtain a positive electrode material.

The rest is the same as in Example 1.

### Example 5

This example differs from Example 1 in the following steps.

### 1.1. Preparation of Positive Electrode Material

In step S1, dissolve soluble nickel salt (nickel sulfate), manganese salt (manganese sulfate), and doping metal salt (aluminum sulfate) in water to obtain a first mixed solution. In the first mixed solution, the concentration of Ni element is 0.54 mol/L, the concentration of Mn element is 0.38 mol/L, and the concentration of Al element is 0.08 mol/L.

In step S2, add sodium hydroxide as a precipitant to the first mixed solution, and after a precipitation reaction for 5 h, filter and dry to obtain a precursor.

In step S3, grind and mix a lithium source (lithium hydroxide) and the precursor at a molar ratio of lithium element to Ni element of 1.60:0.54, then dry to obtain a first mixture.

In step S4, perform low-temperature calcination (i.e., a first calcination treatment) on the first mixture at a temperature of 700°C for 5 h to obtain a first lithium-rich oxide.

In step S5, wet-mix the first lithium-rich oxide, a first coating agent (polyaniline), and a second coating agent (glucose) at a mass ratio of 93:0.5:4 to obtain a second mixture.

In step S6, dry and calcine the second mixture (i.e., a second calcination treatment) at a temperature of 700°C for 8 h to obtain a positive electrode material.

The rest is the same as in Example 1.

### Example 6

This example differs from Example 1 in the following steps.

### 1.1. Preparation of Positive Electrode Material

In step S1, dissolve soluble nickel salt (nickel sulfate), manganese salt (manganese sulfate), and doping metal salt (aluminum sulfate) in water to obtain a first mixed solution. In the first mixed solution, the concentration of Ni element is 0.54 mol/L, the concentration of Mn element is 0.36 mol/L, and the concentration of Al element is 0.1 mol/L.

In step S2, add sodium hydroxide as a precipitant to the first mixed solution, and after a precipitation reaction for 5 h, filter and dry to obtain a precursor.

In step S3, grind and mix a lithium source (lithium hydroxide) and the precursor at a molar ratio of lithium element to Ni element of 1.35:0.54, then dry to obtain a first mixture.

In step S4, perform low-temperature calcination (i.e., a first calcination treatment) on the first mixture at a temperature of 700°C for 5 h to obtain a first lithium-rich oxide.

In step S5, wet-mix the first lithium-rich oxide, a first coating agent (polyaniline), and a second coating agent (glucose) at a mass ratio of 93:0.5:4 to obtain a second mixture.

In step S6, dry and calcine the second mixture (i.e., a second calcination treatment) at a temperature of 700°C for 8 h to obtain a positive electrode material.

The rest is the same as in Example 1.

### Example 7

This example differs from Example 1 in the following steps.

### 1.1. Preparation of Positive Electrode Material

In step S1, dissolve soluble nickel salt (nickel sulfate), manganese salt (manganese sulfate), and doping metal salt (aluminum sulfate) in water to obtain a first mixed solution. In the first mixed solution, the concentration of Ni element is 0.73 mol/L, the concentration of Mn element is 0.185 mol/L, and the concentration of Al element is 0.085 mol/L.

In step S2, add sodium hydroxide as a precipitant to the first mixed solution, and after a precipitation reaction for 5 h, filter and dry to obtain a precursor.

In step S3, grind and mix a lithium source (lithium hydroxide) and the precursor at a molar ratio of lithium element to Ni element of 1.15:0.73, then dry to obtain a first mixture.

In step S4, perform low-temperature calcination (i.e., a first calcination treatment) on the first mixture at a temperature of 700°C for 5 h to obtain a first lithium-rich oxide.

In step S5, wet-mix the first lithium-rich oxide, a first coating agent (polyaniline), and a second coating agent (glucose) at a mass ratio of 93:0.5:4 to obtain a second mixture.

In step S6, dry and calcine the second mixture (i.e., a second calcination treatment) at a temperature of 700°C for 8 h to obtain a positive electrode material.

The rest is the same as in Example 1.

### Example 8

This example differs from Example 1 in the following steps.

### 1.1. Preparation of Positive Electrode Material

In step S1, dissolve soluble nickel salt (nickel sulfate), manganese salt (manganese sulfate), and doping metal salt (zirconium sulfate) in water to obtain a first mixed solution. In the first mixed solution, the concentration of Ni element is 0.74 mol/L, the concentration of Mn element is 0.18 mol/L, and the concentration of Zr element is 0.08 mol/L.

In step S2, add sodium hydroxide as a precipitant to the first mixed solution, and after a precipitation reaction for 5 h, filter and dry to obtain a precursor.

In step S3, grind and mix a lithium source (lithium hydroxide) and the precursor at a molar ratio of lithium element to Ni element of 1.20:0.74, then dry to obtain a first mixture.

In step S4, perform low-temperature calcination (i.e., a first calcination treatment) on the first mixture at a temperature of 700°C for 5 h to obtain a first lithium-rich oxide.

In step S5, wet-mix the first lithium-rich oxide, a first coating agent (polyaniline), and a second coating agent (glucose) at a mass ratio of 93:0.5:4 to obtain a second mixture.

In step S6, dry and calcine the second mixture (i.e., a second calcination treatment) at a temperature of 700°C for 8 h to obtain a positive electrode material.

The rest is the same as in Example 1.

### Example 9

This example differs from Example 1 in the following steps.

### 1.1. Preparation of Positive Electrode Material

In step S1, dissolve soluble nickel salt (nickel sulfate), manganese salt (manganese sulfate), and doping metal salt (magnesium sulfate) in water to obtain a first mixed solution. In the first mixed solution, the concentration of Ni element is 0.67 mol/L, the concentration of Mn element is 0.265 mol/L, and the concentration of Mg element is 0.065 mol/L.

In step S2, add sodium hydroxide as a precipitant to the first mixed solution, and after a precipitation reaction for 5 h, filter and dry to obtain a precursor.

In step S3, grind and mix a lithium source (lithium hydroxide) and the precursor at a molar ratio of lithium element to Ni element of 1.35:0.67, then dry to obtain a first mixture.

In step S4, perform low-temperature calcination (i.e., a first calcination treatment) on the first mixture at a temperature of 700°C for 5 h to obtain a first lithium-rich oxide.

In step S5, wet-mix the first lithium-rich oxide, a first coating agent (polyaniline), and a second coating agent (glucose) at a mass ratio of 93:0.5:4 to obtain a second mixture.

In step S6, dry and calcine the second mixture (i.e., a second calcination treatment) at a temperature of 700°C for 8 h to obtain a positive electrode material.

The rest is the same as in Example 1.

### Example 10

This example differs from Example 1 in the following steps.

### 1.1. Preparation of Positive Electrode Material

In step S1, dissolve soluble nickel salt (nickel sulfate) and manganese salt (manganese sulfate) in water to obtain a first mixed solution. In the first mixed solution, the concentration of Ni element is 0.475 mol/L, and the concentration of Mn element is 0.525 mol/L.

In step S2, add sodium hydroxide as a precipitant to the first mixed solution, and after a precipitation reaction for 5 h, filter and dry to obtain a precursor.

In step S3, grind and mix a lithium source (lithium hydroxide) and the precursor at a molar ratio of lithium element to Ni element of 1.15:0.475, then dry to obtain a first mixture.

In step S4, perform low-temperature calcination (i.e., a first calcination treatment) on the first mixture at a temperature of 700°C for 5 h to obtain a first lithium-rich oxide, which serves as the positive electrode material.

The rest is the same as in Example 1.

### Example 11

This example differs from Example 1 in the following steps.

### 1.1. Preparation of Positive Electrode Material

In step S1, dissolve soluble nickel salt (nickel sulfate) and manganese salt (manganese sulfate) in water to obtain a first mixed solution. In the first mixed solution, the concentration of Ni element is 0.475 mol/L, and the concentration of Mn element is 0.525 mol/L.

In step S2, add sodium hydroxide as a precipitant to the first mixed solution, and after a precipitation reaction for 5 h, filter and dry to obtain a precursor.

In step S3, grind and mix a lithium source (lithium hydroxide) and the precursor at a molar ratio of lithium element to Ni element of 1.15:0.475, then dry to obtain a first mixture.

In step S4, perform low-temperature calcination (i.e., a first calcination treatment) on the first mixture at a temperature of 700°C for 5 h to obtain a first lithium-rich oxide.

In step S5, wet-mix the first lithium-rich oxide and a second coating agent (glucose) at a mass ratio of 93:4.5 to obtain a second mixture.

In step S6, dry and calcine the second mixture (i.e., a second calcination treatment) at a temperature of 700°C for 8 h to obtain a positive electrode material.

The rest is the same as in Example 1.

### Comparative Example 1

This example differs from Example 1 in the following steps.

### 1.1. Preparation of Positive Electrode Material

In step S1, dissolve soluble nickel salt (nickel sulfate) and manganese salt (manganese sulfate) in water to obtain a first mixed solution. In the first mixed solution, the concentration of Ni element is 0.28 mol/L, and the concentration of Mn element is 0.602 mol/L.

In step S2, add sodium hydroxide as a precipitant to the first mixed solution, and after a precipitation reaction for 5 h, filter and dry to obtain a precursor.

In step S3, grind and mix a lithium source (lithium hydroxide) and the precursor at a molar ratio of lithium element to Ni element of 1.03:0.28, then dry to obtain a first mixture.

In step S4, perform low-temperature calcination (i.e., a first calcination treatment) on the first mixture at a temperature of 700°C for 5 h to obtain a first lithium-rich oxide.

In step S5, wet-mix the first lithium-rich oxide, a first coating agent (polyaniline), and a second coating agent (glucose) at a mass ratio of 93:0.5:4 to obtain a second mixture.

In step S6, dry and calcine the second mixture (i.e., a second calcination treatment) at a temperature of 700°C for 8 h to obtain a positive electrode material.

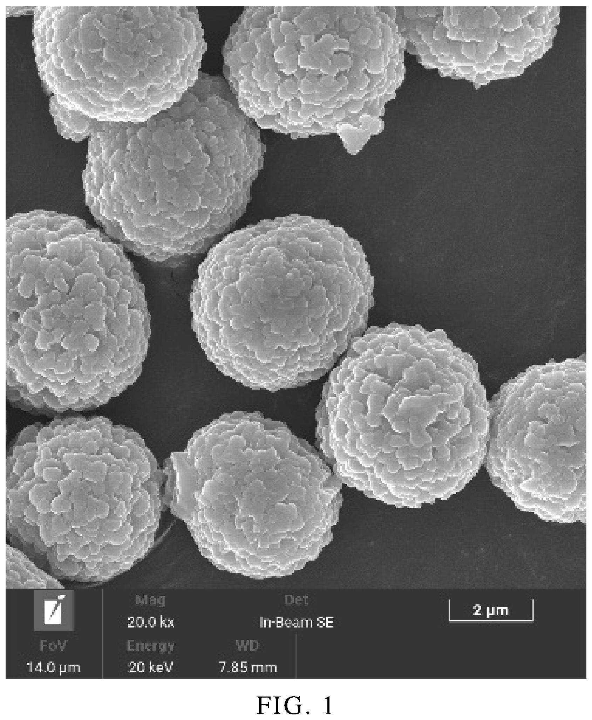

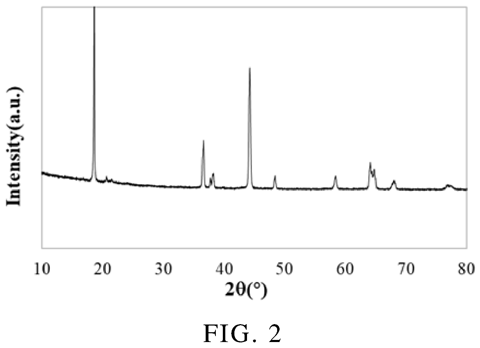

The rest is the same as in Example 1.
I. The following characterizations were performed on the positive electrode material provided in Example 1:
   1. Morphology characterization: The morphology of the positive electrode material was characterized by scanning electron microscopy, and the results are shown in FIG. 1.
   2. X-ray diffraction (XRD) characterization: X-ray diffraction characterization was performed on the positive electrode material, and the results are shown in FIG. 2.
II. The following tests were conducted on the batteries provided in each Example and each Comparative Example:

### 1. Gram Capacity Test process:

1.1. Place the battery on a test cabinet for testing, with the test steps as follows: charge at a constant current of 0.1C to 4.2 V, then charge at a constant voltage of 4.2 V until the current drops to 0.05C to terminate the charge; let it stand for 10 min, then discharge at a constant current of 0.1C to 2.0 V to terminate the discharge, and record the discharge capacity as q. Then, the discharge gram capacity of the positive electrode material = q/m, where m represents the mass of the positive electrode material in the positive electrode plate; the results are recorded in Table 1.
1.2. Place the battery on a test cabinet for testing, with the test steps as follows: charge at a constant current of 0.1C to 4.5 V, then charge at a constant voltage of 4.5 V until the current drops to 0.05C to terminate the charge; let it stand for 10 min, then discharge at a constant current of 0.1C to 2.0 V to terminate the discharge, and record the discharge capacity as q. Then, the discharge gram capacity of the positive electrode material = q/m, where m represents the mass of the positive electrode material in the positive electrode plate; the results are recorded in Table 1.
1.3. Place the battery on a test cabinet for testing, with the test steps as follows: charge at a constant current of 0.1C to 4.7 V, then charge at a constant voltage of 4.7 V until the current drops to 0.05C to terminate the charge; let it stand for 10 min, then discharge at a constant current of 0.1C to 2.0 V to terminate the discharge, and record the discharge capacity as q. Then, the discharge gram capacity of the positive electrode material = q/m, where m represents the mass of the positive electrode material in the positive electrode plate; the results are recorded in Table 1.

### 2. Cycling performance test process:

2.1. At 25°C with the voltage range set to 2.5 V-4.2 V, charge and discharge the prepared battery at a 1C rate; during the charging process, charge at a constant current of 1C to 4.2 V, then charge at a constant voltage of 4.2 V until the current drops to 0.05C to terminate the charge; during the discharge process, discharge at a constant current of 1C to 2.5 V to terminate the discharge; record the number of cycles when the cycle capacity retention rate is 100%, and the results are recorded in Table 2.
2.2. At 25°C with the voltage range set to 2.5 V-4.5 V, charge and discharge the prepared battery at a 1C rate; during the charging process, charge at a constant current of 1C to 4.5 V, then charge at a constant voltage of 4.5 V until the current drops to 0.05C to terminate the charge; during the discharge process, discharge at a constant current of 1C to 2.5 V to terminate the discharge; record the number of cycles when the cycle capacity retention rate is 100%, and the results are recorded in Table 2.
2.3. At 25°C with the voltage range set to 2.5 V-4.7 V, charge and discharge the prepared battery at a 1C rate; during the charging process, charge at a constant current of 1C to 4.7 V, then charge at a constant voltage of 4.7 V until the current drops to 0.05C to terminate the charge; during the discharge process, discharge at a constant current of 1C to 2.5 V to terminate the discharge; record the number of cycles when the cycle capacity retention rate is 100%, and the results are recorded in Table 2.

**Table 2**

| Group | Chemical Formula of First Lithium-Rich Oxide | 4.2 V-1C Cycle | 4.5 V-1C Cycle | 4.7 V-1C Cycle |
|---|---|---|---|---|
| Example 1 | Li_{1.15}Ni_{0.475}Mn_{0.525}O_{2.1} | 4000 @ 100% | 1000 @ 100% | 500 @ 100% |
| Example 2 | Li_{1.10}Ni_{0.5}Mn_{0.50}O_{2.05} | 3500 @ 100% | 700 @ 100% | 400 @ 100% |
| Example 3 | Li_{1.20}Ni_{0.45}Mn_{0.55}O_{2.15} | 4500 @ 100% | 1300 @ 100% | 600 @ 100% |
| Example 4 | Li_{1.45}Ni_{0.375}Mn_{0.625}O_{2.35} | 1000 @ 100% | 600 @ 100% | 500 @ 100% |
| Example 5 | Li_{1.60}Ni_{0.54}Mn_{0.38}Al_{0.08}O_{2.3} | 6000 @ 100% | 2000 @ 100% | 800 @ 100% |
| Example 6 | Li_{1.35}Ni_{0.54}Mn_{0.36}Al_{0.1}O_{2.2} | 2000 @ 100% | 800 @ 100% | 500 @ 100% |
| Example 7 | Li_{1.15}Ni_{0.73}Mn_{0.185}Al_{0.085}O_{2.1} | 3800 @ 100% | 1000 @ 100% | 500 @ 100% |
| Example 8 | Li_{1.20}Ni_{0.74}Mn_{0.18}Zr_{0.08}O_{2.10} | 4800 @ 100% | 1200 @ 100% | 800 @ 100% |
| Example 9 | Li_{1.35}Ni_{0.67}Mn_{0.265}Mg_{0.065}O_{2.2} | 5000 @ 100% | 1500 @ 100% | 600 @ 100% |
| Example 10 | Li_{1.15}Ni_{0.475}Mn_{0.525}O_{2.1} | 3600 @ 100% | 850 @ 100% | 470 @ 100% |
| Example 11 | Li_{1.15}Ni_{0.475}Mn_{0.525}O_{2.1} | 3900 @ 100% | 920 @ 100% | 500 @ 100% |
| Comparative Example 1 | Li_{1.03}Ni_{0.28}Mn_{0.602}O₂ | 900 @ 100% | 500 @ 100% | 400 @ 100% |

### III. Result Analysis

3.1. It can be seen from the test results in Table 1 and Table 2 that when Examples 1 to 11 are compared with Comparative Example 1, Examples 1 to 11 are superior to Comparative Example 1 in terms of both the gram capacity of the positive electrode material in the battery and the cycling performance of the battery, whether under low voltage (4.2 V) or high voltage (4.7 V) conditions. This is because, compared with the positive electrode material provided in Comparative Example 1, the positive electrode materials provided in Examples 1 to 11 have higher contents of lithium and nickel and lower content of manganese. Increasing the content of lithium can improve the energy density of the positive electrode material. Meanwhile, increasing the content of nickel and reducing the content of manganese can lower the activation energy barrier of the positive electrode material, enabling the positive electrode material to exhibit a higher gram capacity at a lower activation voltage, widening the voltage window of the positive electrode material, and improving the cycling performance of the battery.
3.2. It can be seen from the test results in Table 1 and Table 2 that when comparing Examples 1-4 and 10-11 with Examples 5-9, the positive electrode materials provided in Examples 5-9 are further doped with other metals besides Li, Ni, and Mn. By comparing the 4.2 V/4.7 V gram capacity ratio (i.e., the ratio of the gram capacity at 4.2 V to that at 4.7 V), it can be observed that the 4.2 V/4.7 V gram capacity ratio of Examples 5-9 is slightly higher than that of Examples 1-4 and 10-11. This indicates that doping with other metals can further reduce the activation energy barrier of the positive electrode material to a certain extent.
3.3. It can be seen from the test results in Table 1 and Table 2 that when comparing Example 1 with Example 11, during the preparation process of the positive electrode material provided in Example 1, the first lithium-rich oxide is mixed with the first coating agent (polyaniline) and the second coating agent (glucose) and then calcined. This allows the formation of a carbon coating layer on the first lithium-rich oxide, and the thermal decomposition of polyaniline during calcination enables nitrogen elements to dope the first lithium-rich oxide. In contrast, during the preparation of the positive electrode material in Example 11, the first lithium-rich oxide is mixed with the second coating agent (glucose) and calcined, thus forming a carbon coating layer on the first lithium-rich oxide. Since it is not mixed with the first coating agent (polyaniline), the first lithium-rich oxide is not doped with nitrogen. From the electrochemical test results, it can be seen that their gram capacities at different voltages are close. However, the cycling performance of Example 1 at different voltages is superior to that of Example 11. This is because after doping the first lithium-rich oxide with nitrogen, the structure of the first lithium-rich oxide becomes more stable during the intercalation and deintercalation of lithium ions, reducing the risk of lattice expansion or contraction of the first lithium-rich oxide, thereby improving the cycling performance of the battery.
3.4. As can be seen from the test results in Table 1 and Table 2, when comparing Example 11 with Example 1 and Example 10, the positive electrode material provided in Example 11 only contains the first lithium-rich oxide. There is neither a carbon coating layer on the surface of the first lithium-rich oxide nor nitrogen doping in the first lithium-rich oxide, and Example 11 shows the worst cycling performance among the three. This is because the carbon coating layer on the surface of the first lithium-rich oxide is relatively easy to be wetted by the electrolyte, which makes the carbon coating layer form an intermediate transition region, and then forms a gradient distribution of lithium ions from the electrolyte to the coating layer and then to the first lithium-rich oxide. This can facilitate the intercalation and deintercalation of lithium ions, thus improving the cycling performance of the battery.

## Claims

1. A positive electrode material, comprising a lithium-rich oxide, wherein the lithium-rich oxide has a chemical formula represented by Li₁₊ₓMn_{y}Ni_{z}MₐBᵣ, wherein M represents a doping metal element, B comprises an oxygen element, and by molar ratio, 0.1 ≤ x ≤ 1.0, 0 ≤ y ≤ 1.0, 0.30 ≤ z ≤ 0.95, 0 ≤ a ≤ 0.1, and 2.0 ≤ r ≤ 2.7.

2. The positive electrode material according to claim 1, wherein B further comprises a nitrogen element.

3. The positive electrode material according to claim 2, wherein a doping amount of the nitrogen element is less than or equal to 1.0wt% based on a total mass of the positive electrode material.

4. The positive electrode material according to claim 1, wherein a surface of the lithium-rich oxide is provided with a carbon coating layer.

5. The positive electrode material according to claim 4, wherein carbon in the carbon coating layer comprises graphitized amorphous carbon, and a content of the graphitized amorphous carbon is less than or equal to 10wt% based on a total mass of the carbon coating layer; and/or a thickness of the carbon coating layer ranges from 1 nm to 10 nm.

6. The positive electrode material according to claim 5, wherein the content of the graphitized amorphous carbon is less than or equal to 3wt% based on a total mass of the positive electrode material.

7. The positive electrode material according to any one of claims 1 to 6, wherein the doping metal element comprises at least one of Fe, Al, Mg, Ti, Nb, and Zr.

8. The positive electrode material according to any one of claims 1 to 6, wherein by molar ratio, 0.1 ≤ x ≤ 0.6, 0.18 ≤ y ≤ 0.625, 0.375 ≤ z ≤ 0.74, 0 ≤ a ≤ 0.1, and 2.05 ≤ r ≤ 2.35.

9. The positive electrode material according to any one of claims 1 to 6, wherein the positive electrode material is granular and has a D50 particle size of 1.0 µm to 15.0 µm.

10. A method for preparing a positive electrode material, used for preparing the positive electrode material as claimed in any one of claims 1 to 9, comprising steps of:
providing a first lithium-rich oxide, wherein the first lithium-rich oxide has a chemical formula represented by Li₁₊ₓMn_{y}Ni_{z}MₐOᵣ, wherein M represents a doping metal element, B comprises an oxygen element, and by molar ratio, 0.1 ≤ x ≤ 1.0, 0 ≤ y ≤ 1.0, 0.30 ≤ z ≤ 0.95, 0 ≤ a ≤ 0.1, and 2.0 ≤ r ≤ 2.7; and
obtaining the positive electrode material based on the first lithium-rich oxide.

11. The method for preparing the positive electrode material according to claim 10, wherein the providing the first lithium-rich oxide comprises steps of:
adding a nickel source and a manganese source to a solvent to obtain a first mixed solution;
adding a precipitant to the first mixed solution to obtain a precursor through filtering and drying;
performing a first mixing treatment on a lithium source and the precursor to obtain a first mixture; and
performing a first calcination treatment on the first mixture to obtain the first lithium-rich oxide.

12. The method for preparing the positive electrode material according to claim 11, wherein when preparing the first mixed solution, a doping metal source is further added to the solvent.

13. The method for preparing the positive electrode material according to claim 11, wherein the obtaining the positive electrode material based on the first lithium-rich oxide comprises steps of:
performing a second mixing treatment on a first coating agent and the first lithium-rich oxide to obtain a second mixture, wherein the first coating agent is an organic compound containing a nitrogen element; and
performing a second calcination treatment on the second mixture to obtain a second lithium-rich oxide, wherein a surface of the second lithium-rich oxide is coated with a carbon coating layer, and the second lithium-rich oxide has a chemical formula represented by Li₁₊ₓMn_{y}Ni_{z}MₐBᵣ, wherein M represents a doping metal element, B comprises O and N, and by molar ratio, 0.1 ≤ x ≤ 1.0, 0 ≤ y ≤ 1.0, 0.30 ≤ z ≤ 0.95, 0 ≤ a ≤ 0.1, and 2.0 ≤ r ≤ 2.7.

14. The method for preparing the positive electrode material according to claim 13, wherein when preparing the second mixture, a second coating agent is further added to the first lithium-rich oxide, wherein a carbonization temperature of the second coating agent is lower than a carbonization temperature of the first coating agent.

15. The method for preparing the positive electrode material according to claim 14, wherein,
the first coating agent comprises at least one of polyaniline and polycyanamide; and/or
the second coating agent comprises at least one of glucose, polyethylene glycol, sucrose, polyaniline, and polypyrrole; and/or
in the second mixture, a mass ratio of the first coating agent to the second coating agent to the first lithium-rich oxide is (0.1-2.0): (3.0-6.0): (92-94); and/or
the second calcination treatment is performed at a temperature of 600°C to 800°C for 6 h to 12 h.

16. The method for preparing the positive electrode material according to claim 12, wherein,
the nickel source comprises at least one of nickel sulfate, nickel nitrate, nickel acetate, nickel carbonate, and nickel chloride; and/or
the manganese source comprises at least one of manganese sulfate, manganese nitrate, manganese carbonate, manganese acetate, manganese tetroxide, and manganese dioxide; and/or
the doping metal source comprises at least one of an iron salt, an aluminum salt, a magnesium salt, a titanium salt, a niobium salt, and a zirconium salt; and/or
the solvent comprises water; and/or
in the first mixed solution, a molar ratio of a manganese element to a nickel element to a doping metal element is (0-1.0): (0.3-0.95): (0-0.1); and/or
in the first mixed solution, a concentration of the manganese element ranges from 0.1 mol/L to 0.65 mol/L, a concentration of the nickel element ranges from 0.3 mol/L to 1.5 mol/L, and a concentration of the doping metal element ranges from 0.01 mol/L to 0.1 mol/L.

17. The method for preparing the positive electrode material according to claim 11, wherein,
the precipitant comprises at least one of sodium hydroxide and potassium hydroxide; and/or
after adding the precipitant, a concentration of the precipitant in the first mixed solution ranges from 0.1 mol/L to 2.0 mol/L; and/or
after adding the precipitant, pH of the first mixed solution ranges from 8 to 11; and/or
a duration of a precipitation reaction ranges from 3 h to 10 h.

18. The method for preparing the positive electrode material according to claim 11, wherein,
the lithium source comprises at least one of lithium hydroxide, lithium carbonate, and lithium oxide; and/or
in the first mixture, a molar ratio of a lithium element in the lithium source to a nickel element in the precursor ranges from 1.2 to 4.0; and/or
the first mixing treatment is a grinding treatment; and/or
the first mixing treatment is performed for 30 min to 180 min; and/or
the first calcination treatment is performed at a temperature of 600°C to 800°C for 3 h to 8 h.

19. A positive electrode plate, comprising a positive electrode current collector and a positive electrode film layer combined with the positive electrode current collector, wherein the positive electrode film layer comprises the positive electrode material as claimed in any one of claims 1 to 9, or comprises a positive electrode material prepared by the method for preparing the positive electrode material as claimed in any one of claims 10 to 18.

20. A battery, comprising the positive electrode plate as claimed in claim 19.
